# EUROPEAN PATENT APPLICATION

(11) **EP 4 660 482 A1**
(43) Date of publication of application: **10.12.2025**
(21) Application number: 24750557.1
(22) Date of filing: 31.01.2024
(51) Int. Cl.: F16H 41/24, F16H 45/02, B60K 6/36

(54) **HYBRID DRIVING MODULE**

(30) Priority: 31.01.2023 KR 20230012832
(71) Applicant: Valeo Kapec Co., Ltd., Daegu 42709 (KR)
(72) Inventor: JO, A-Ron, Daegu 42709 (KR); KIM, Jung-Hyuck, Daegu 42709 (KR); PARK, Jin-Su, Daegu 42709 (KR)
(74) Representative: Isarpatent
(86) International application number: PCT/KR2024/001464
(87) International publication number: WO 2024/162759

(57) **Abstract**

The present invention provides an axially compact hybrid drive module including a power transmission unit that transmits rotational force of a rotor hub generated by an engine and a motor to a transmission. A turbine plate and a piston plate of the power transmission unit extend in a radial direction to an extent corresponding to a stator. An output member of the power transmission unit forms a part of a torsional damper connected to a lock-up clutch, thereby supporting the turbine plate over a long range in the radial direction. Accordingly, a hybrid drive module that is more compact in the axial direction can be manufactured, while sufficiently reinforcing the rigidity of components extended in the radial direction and reducing the number of components.

## Description

### Technical Field

This application claims priority to and the benefit of Korean Patent Application No. 10-2023-0012832 filed in the Korean Intellectual Property Office on January 31, 2023, the entire contents of which are incorporated herein by reference.

The present invention relates to a hybrid drive module, and more specifically, to a hybrid drive module that ensures sufficient transmission torque of a torque converter while minimizing the number of components, is structurally robust, and is axially compact.

### Background Art

A drive module used for a hybrid vehicle has a structure configured to transmit power from a motor and an engine to a transmission. A hybrid drive module includes a main housing with a built-in motor, an input member, which is rotatably installed in the main housing and receives an output from an engine, and an output member, which is rotatably installed in the main housing and transmits outputs from the engine and the motor to a transmission.

The motor includes a stator fixed to the main housing, and a rotor installed in a rotor hub rotatably installed in the main housing.

The input member is selectively connected to the rotor hub via an engine clutch. The engine clutch constrains rotation of the input member and the rotor hub when transmitting engine power to the rotor hub, and releases the constrained rotation of the input member and the rotor hub when the engine is to be prevented from acting as a load on the rotor hub.

The rotor hub is connected to the output member via a power transmission unit. The power transmission unit may have a structure that directly connects the rotor hub and the output member, or a structure that includes a torque converter and a lock-up clutch.

Compared to a general power transmission unit that connects the engine and the transmission, the hybrid drive module includes an additional motor, which increases the number of associated components and consequently requires a substantial amount of space. Accordingly, efforts are continuously being made to design the hybrid drive module in a compact manner.

The hybrid drive module is a component that generates and transmits rotational force. Therefore, if the hybrid drive module is designed to be compact in the radial direction, it will have a structure that is disadvantageous to its inherent function of generating and transmitting torque.

On the other hand, if the hybrid drive module is designed to be compact in the axial direction, its inherent function of generating and transmitting torque can be sufficiently exerted. However, it is difficult to secure an axial dimension compared to a radial dimension of each component, so there is a high possibility that each component will be deformed by a force applied in the axial direction.

Particularly in a rotational structure such as a hybrid drive module, connection and disconnection of power are often performed in the axial direction. Therefore, it is necessary to secure sufficient strength so that each component does not sag in the axial direction due to such a force.

In particular, the turbine plate of the torque converter or the piston plate of the lock-up clutch provided in the power transmission unit is advantageous in securing transmission torque as its radial dimension increases. However, there is a concern that a large deformation may occur because a greater amount of pressure of fluid flowing through the torus or pressure of fluid applied to the piston plate acts accordingly.

### Disclosure

### Technical Problem

The present invention has been made to solve the above-described problems, and is intended to provide a hybrid drive module including a turbine plate and a piston plate that are compact in an axial direction and have large dimensions in a radial direction, while minimizing deformation caused by pressure applied in the axial direction.

The present invention is intended to provide a hybrid drive module that is more compact in the axial direction by reducing the number of components of a power transmission unit.

The present invention is intended to provide a hybrid drive module in which components of a power transmission unit are assembled in a structure where they support each other in the axial direction, thereby reducing the number of components and achieving compactness in the axial direction, while also minimizing deformation occurring in each component due to pressure applied in the axial direction.

The technical problems of the present invention are not limited to those described above, and other objects and advantages of the present invention that are not described above can be understood by the following description and will be more clearly understood by the exemplary embodiments of the present invention. In addition, it will be readily understood that the objects and advantages of the present invention can be realized by means set forth in the claims and combinations thereof.

### Technical Solution

The present invention, which is intended to solve the above-described problems, may be applied to a hybrid drive module including a power transmission unit configured to transmit rotational force of a rotor hub 20 generated by an engine and a motor 12 to a transmission.

By applying the present invention, it is possible to secure a radial dimension of the power transmission unit and to make its axial dimension compact, while sufficiently securing the strength of each component constituting the power transmission unit.

The power transmission unit includes an output member 50 connected to an input shaft of the transmission so as to be rotationally constrained, and a torque converter 30 interposed between the rotor hub 20 and the output member 50 in a power transmission system.

The torque converter 30 may receive the rotational force of the rotor hub 20 through a cover 26 connected to the rotor hub 20 and extending rearward from the rotor hub 20, and may transmit the rotational force to the output member 50 through a fluid coupling of a torus.

The cover 26 may have a shape that is more extended in the radial direction than the rotor hub 20 at the rear of the rotor hub 20. Accordingly, the radius of the torus installed inside the cover can be further increased.

The cover 26 may include a front cover 27 connected to the rotor hub 20 and having a diameter increasing rearward, and a rear cover 28 connected to a rear end portion of the front cover 27 and having a diameter decreasing rearward.

An impeller 31 of the torus may be installed on an inner wall surface of the rear cover 28, the surface facing forward. Accordingly, the impeller 31 can rotate together with the cover 26 and the rotor hub 20.

In an internal space of the cover 26, a turbine 32 of the torus facing the impeller 31 in an axial direction is installed in front of the impeller 31.

The turbine 32 is installed on a turbine plate 40 configured to rotate independently of the cover 26.

The turbine plate 40 includes a blade shell 41 having the turbine 32 installed thereon and configured to receive rotational force from a fluid flowing due to rotation of the impeller 31, a neck portion 42 connected to a radially inner end portion of the blade shell 41 and extending forward in a radially inward direction, and an output member connecting portion 43 extending in the radially inward direction from a radially inner end portion of the neck portion 42.

The output member connecting portion 43 includes a radially outer portion 47 connected to the neck portion 42, and a radially inner portion 45 connected to a radially inner side of the radially outer portion 47.

The output member 50 includes an output hub 51 extending in the axial direction, and a radial extension portion 52 extending radially outward from the output hub 51.

The output hub 51 may be provided on and engaged with an input shaft of the transmission so as to be rotationally constrained.

The radial extension portion 52 includes a radially inner connecting portion 53 connected to the output hub 51, and a radially outer support portion 54 connected to a radially outer side of the radially inner connecting portion 53.

The radially inner portion 45 of the output member connecting portion 43 is fixed to a radially inner connecting portion 53 of the radial extension portion 52 of the output member 50. Accordingly, the turbine plate 40 and the output member 50 are fixed to each other and may move integrally in the axial, radial, and circumferential directions.

A front surface of the radially outer portion 47 of the output member connecting portion 43 is supported forward while being in contact with a rear surface of the radially outer support portion 54 of the radial extension portion 52 of the output member 50. Accordingly, even when the blade shell 41 is pressed forward by a fluid flowing through the torus, the radial extension portion 52 of the output member 50 supports the turbine plate 40 forward up to a position as close as possible to the blade shell 41 in the radial direction, so that deformation in which the blade shell 41 having a long radial distance sags forward due to the fluid in the torus can be prevented.

The radially outer portion 47 of the output member connecting portion 43 may be supported forward, in at least a partial circumferential region, up to a boundary portion r4 between the output member connecting portion 43 and the neck portion 42 by the radially outer support portion 54 of the output member 50.

When the radially outer support portion 54 of the output member 50 supports the output member connecting portion 43 forward up to a position r4 as far as possible in the radial direction from a fixing position r1 between the output member 50 and the turbine plate 40, a radial length (r9-r4) over which the turbine plate 40 is not supported forward in the axial direction can be minimized.

Thus, even when the turbine plate 40 is made of sheet metal, it can be supported by the output member 50 with higher strength.

The blade shell 41 of the turbine plate 40 may extend further radially outward than an outer periphery r8 of the rotor 16 installed on the rotor hub 20.

According to the present invention, the radially outer support portion 54 of the output member 50 is utilized as a supporter that supports the turbine plate 40 and at the same time as a damper output member of a torsional damper 70, thereby enabling a further reduction in the number of components of the power transmission unit and a more compact design in the axial direction.

The power transmission unit may further include a lock-up clutch 60 interposed between the rotor hub 20 and the output member 50 and arranged in parallel with the torque converter 30 in the power transmission system.

The lock-up clutch 60 may include a piston plate 61 installed to be movable in the axial direction, and a friction member 63 installed on the piston plate 61.

The piston plate 61 may be arranged between the rotor hub 20 and the output member 50 in the axial direction.

The friction member 63 may be arranged at a radially outer end portion of the piston plate 61.

A friction surface of the friction member 63 may axially face the inner wall surface of the cover 26 configured to rotate together with the rotor hub 20.

Since the cover 26 has a shape that is more extended in the radial direction than the rotor hub 20 at the rear of the rotor hub 20, the piston plate 61 may also be further extended in the radial direction.

The friction member 63 may be installed on a radially outer end portion of a front surface of the piston plate 61.

Accordingly, the inner wall surface of the radially extended front cover 27 that faces rearward and the friction surface of the friction member 63 that faces forward may face each other in the axial direction.

The friction member 63 may be arranged radially outward of an inner periphery r7 of the rotor 16 installed on the rotor hub 20, and more preferably, radially outward of an outer periphery r8 of the rotor 16.

Accordingly, even when a single-plate clutch is used, the lock-up clutch 60 can sufficiently transmit torque.

The piston plate 61 may be connected to the output member 50 through a torsional damper 70.

The radially outer support portion 54 of the output member 50 may include output projections 55 interposed between a plurality of springs 71 of the torsional damper 70, which are arranged in a row along the circumferential direction.

The output projections 55 extend in the radially outward direction from the radially outer support portion 54 and are bent forward, such that they interfere with the springs 71 in the circumferential direction, thereby allowing the output member 50 itself to function as a damper output member.

Furthermore, since a rear surface of the output projection 55 extends further in the radial direction from the radially outer support portion 54, the rear surface of the output projection 55 may be used as a structure that is in contact with a front surface of the radially outer portion 47 of the output member connecting portion 43 and supports the output member connecting portion 43 up to a boundary portion r4 with the neck portion 42.

The boundary portion r4 between the output member connecting portion 43 and the neck portion 42 of the turbine plate 40 may be arranged radially outward of a radially inner end portion r3 of the spring 71.

The output projections 55 are spaced apart along the circumferential direction for functional reasons, while the output member connecting portion 43 of the turbine plate 40 supported by the output projections 55 may provide a continuous annular surface in the circumferential direction. Accordingly, the front surface of the output member connecting portion 43 of the turbine plate 40 supported by the rear surfaces of the output projections 55 may also function as a retainer that supports the rear sides of the springs 71 of the torsional damper 70.

In the axial direction, at least a portion of the radial extension portion 52 of the output member 50 may be arranged forward of an axial rear end portion a1 of the spring 71. Thus, by arranging the radial extension portion 52 within a region occupied in the axial direction by the springs 71 of the torsional damper 70, space can be efficiently utilized, thereby allowing the hybrid drive module to be designed to be more compact in the axial direction.

The torsional damper 70 may be arranged radially inward of an inner periphery r7 of the rotor 16 installed on the rotor hub 20. Thus, by arranging the torsional damper 70 in the radially inner space of the rotor 16, which requires a certain length in the axial direction, space can be efficiently utilized, thereby allowing the hybrid drive module to be designed to be more compact in the axial direction.

For direct connection and direct disconnection between the rotor hub 20 and the output member 50, the piston plate 61 of the lock-up clutch 60 may slide reciprocally in the axial direction.

When the piston plate 61 moves forward and strongly presses the friction member 63 against the cover 26, the rotor hub 20 and the output member 50 are directly connected. When the piston plate 61 moves rearward and thus the friction member 63 separates from the cover 26, the direct connection between the rotor hub 20 and the output member 50 is released.

The piston plate 61 may slide in the axial direction within a predetermined range.

A front end of the predetermined range may be determined by a position where the friction member 63 is in contact with the cover 26 connecting the rotor hub 20 and the impeller 31.

A rear end of the predetermined range may be determined by a position at which a rear stopper 62 provided at a radially inner end portion of the piston plate 61 is in contact with a front surface of the output member 50.

The rear stopper 62 may interfere with the radial extension portion 52 of the output member 50. Specifically, the rear stopper 62 may interfere with the radially inner connecting portion 53 of the radial extension portion 52.

To facilitate the interference of the rear stopper 62, the radially inner connecting portion 53 may be positioned forward of the radially outer support portion 54.

The torsional damper 70 having the springs 71 includes a damper input member 72 that is connected to the piston plate 61 and transmits rotational force of the piston plate 61 to the springs 71, and a damper output member that receives the rotational force of the piston plate 61 through the springs 71.

The damper output member may be implemented by the output projections 55 of the output member 50 described above.

The damper input member 72 may include a retainer 73 that accommodates and supports the springs 71, and a damper stopper 74 that extends rearward radially inward of the springs 71.

The damper input member 72 may be manufactured as a separate component from the piston plate 61, and may be assembled and integrated to the piston plate 61.

The damper input member 72 may further include a piston connecting portion 76 fixed to the piston plate 61. The piston connecting portion 76 may be arranged in a space radially inward of the spring 71.

The retainer 73 may retain the springs 71 while supporting the outer peripheries and front surfaces of the springs 71.

As the damper output member, the output member 50 may further have a structure that interferes with the damper stopper 74 to limit a relative rotational displacement of the damper input member 72 with respect to the damper output member within a predetermined angle.

An accommodation groove 56, in which the radially outer support portion 54 is recessed radially inward, may be provided between two output projections 55 that are adjacent to each other in the circumferential direction on the radially outer support portion 54 of the output member 50.

The allowable relative rotational displacement of the damper input member 72 with respect to the damper output member may be determined based on a circumferential width of the accommodation groove 56 and a circumferential width of the damper stopper 74 accommodated therein.

Outer peripheral surfaces of the plurality of accommodation grooves 56 arranged along the circumferential direction and inner peripheral surfaces of the damper stoppers 74 may be arranged to face each other in the radial direction.

A radius of the outer peripheral surface of the accommodation groove 56 may be slightly smaller than a radius of the inner peripheral surface of the damper stopper 74 accommodated in the accommodation groove 56.

Accordingly, centers of the damper input member 72 and the piston plate 61 may be aligned with respect to a center of the output member 50.

Thus, the output member 50 can be configured without a separate axial extension portion for axially aligning the piston plate 61, thereby allowing a more compact design in the axial direction.

Separately, an inner peripheral surface of the radially inner end portion of the piston plate 61 may be configured to be brought into contact with an outer peripheral surface of the input shaft of the transmission, thereby ensuring alignment between the center of the piston plate 61 and the center of the output member 50. The inner peripheral surface of the rear stopper 62 that regulates a rear position of the piston plate 61 is brought into contact with the input shaft of the transmission, thereby guiding the center alignment.

### Advantageous Effects

According to the present invention, deformation of the power transmission unit caused by pressure applied in the axial direction at a radially outer portion with a large radius can be minimized, while achieving a compact axial dimension and a large radial dimension.

According to the present invention, without a separate damper output member, the output member connected to the input shaft of the transmission also serves as the damper output member, and a structure for this purpose is implemented. Thus, the radial extension portion of the output member extending further in the radial direction supports the turbine plate over a substantial radial range, thereby enabling a reduction in the number of components while ensuring sufficient rigidity to prevent deformation of large-radius components due to pressure.

In addition, the turbine plate, which is installed in close contact with the radially outer support portion of the output member for rigid support, is also configured to function as a retainer for the damper output member. Accordingly, the number of components can be reduced, and the power transmission unit of the hybrid drive module can be designed to be more compact in the axial direction.

According to the present invention, the output projections and the stopper accommodation grooves are implemented on the output member, and the retainer function is implemented by the turbine plate, so that these components are utilized as the damper output member of the torsional damper. This not only reduces the number of components, but also provides the effect, through the corresponding structure, of allowing the turbine plate, which has relatively low rigidity and is required to be extended in the radial direction, to be supported by the output member having high rigidity.

In addition to the effects described above, specific effects of the present invention will be described below together with specific matters for implementing the invention.

### Brief Description of Drawings

FIGS. 1 and 2 are side cross-sectional views of a hybrid drive module to which a power transmission unit according to a preferred exemplary embodiment of the present invention is applied.

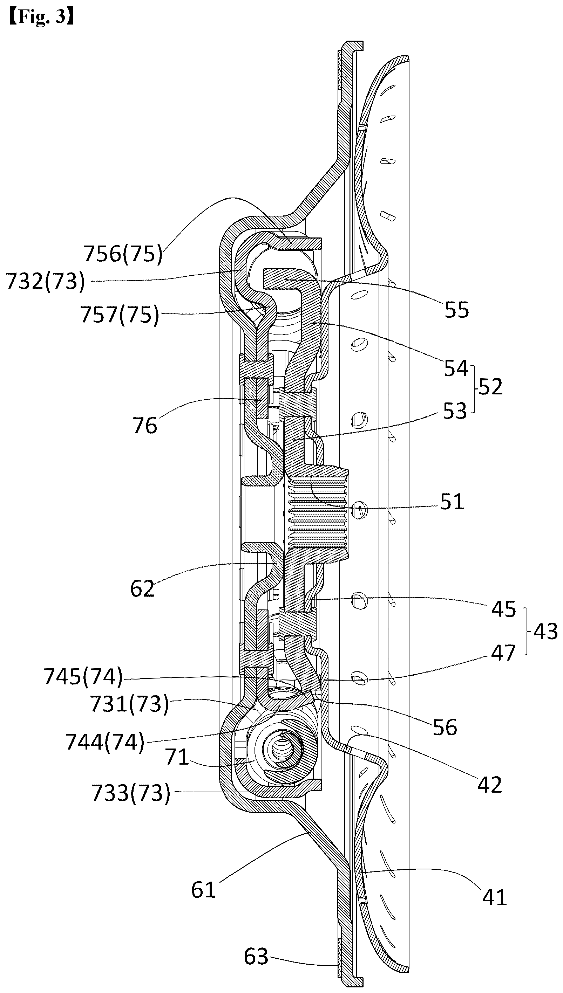

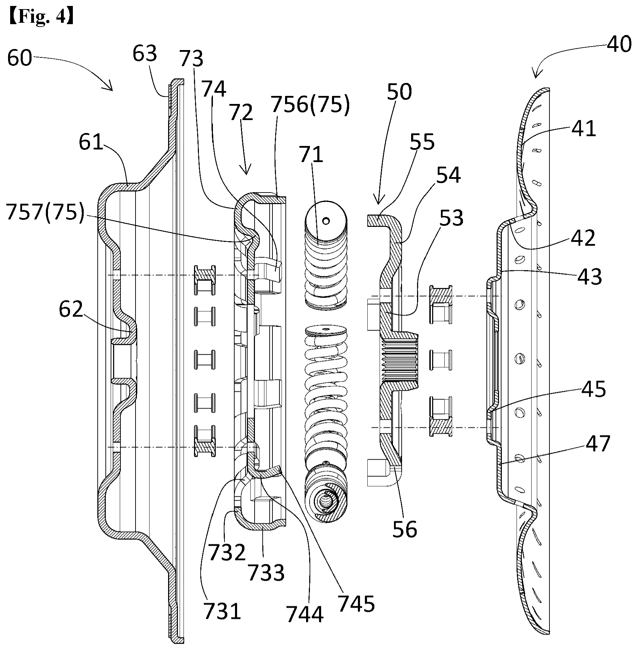

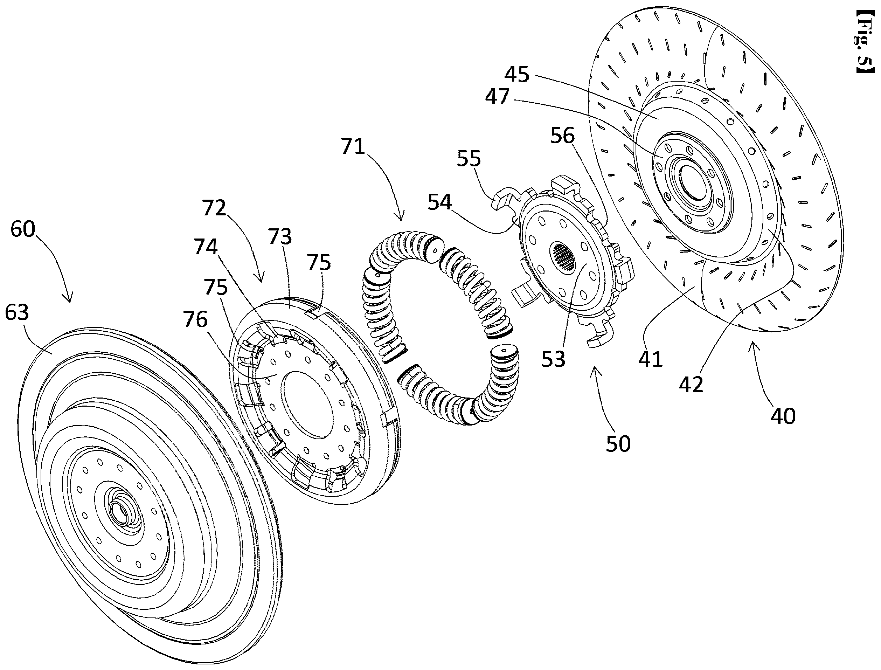

FIGS. 3 to 5 are a side cross-sectional view, an exploded side cross-sectional view, and an exploded perspective view of a lock-up clutch, a torsional damper, an output member, and a turbine plate of the power transmission unit of FIGS. 1 and 2.

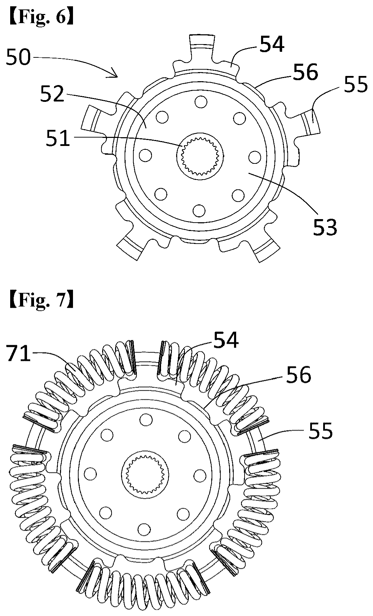

FIG. 6 is a front view of the output member.
FIG. 7 is a front view of the output member and springs of the torsional damper.

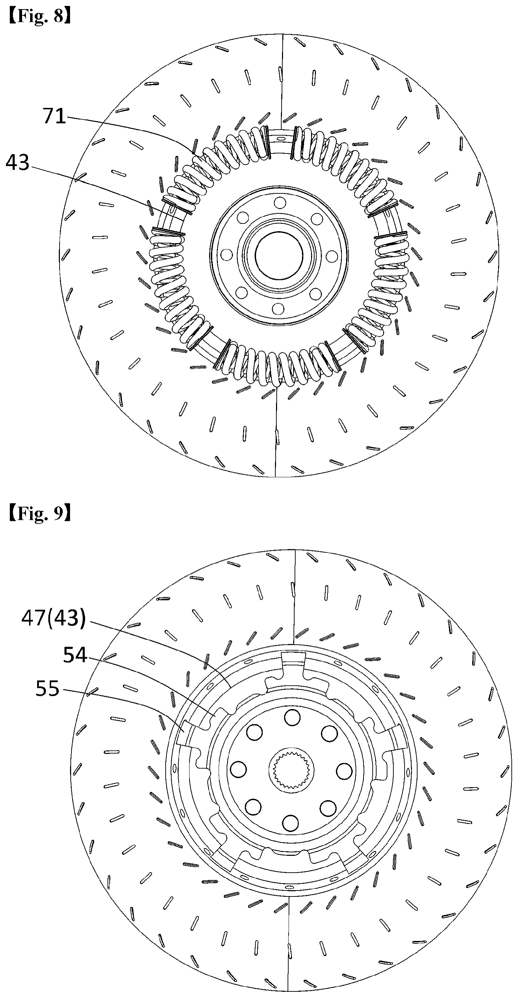

FIG. 8 is a front view of the turbine plate and the springs.
FIG. 9 is a front view of the output member and the turbine plate.

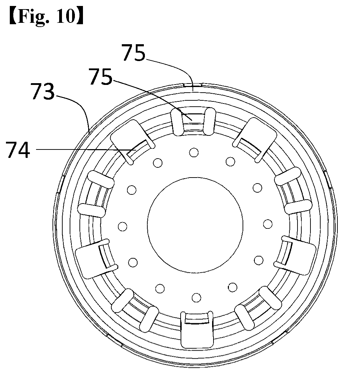

FIG. 10 is a rear view of a damper input member of the torsional damper.

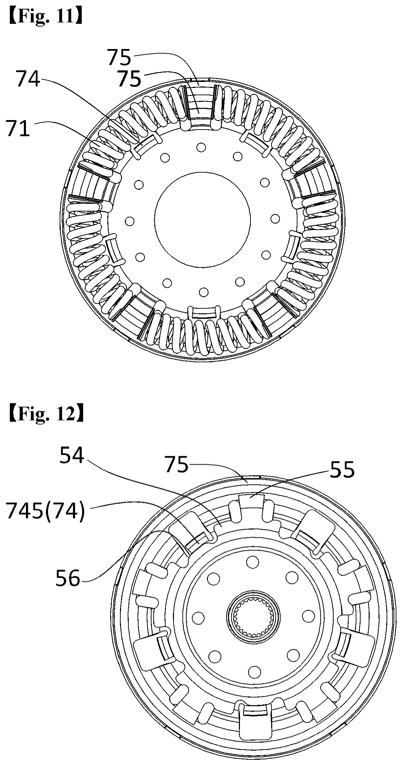

FIG. 11 is a rear view of the damper input member and the springs.
FIG. 12 is a rear view of the damper input member and the output member.

### <Explanation of Reference Numerals and Symbols>

10: main housing, 12: motor, 14: stater, 16: rotor, 20: rotor hub, 22: input member (drive shaft), 24: engine clutch (one-way clutch) 26: cover, 27: front cover, 28: rear cover, 29: pump drive hub, 30: torque converter, 31: impeller, 32: turbine, 33: reactor, 34: one-way clutch, 35: fixed end, 40: turbine plate, 41: blade shell, 42: neck portion, 43: output member connecting portion, 45: radially inner portion, 47: radially outer portion, 50: output member, 51: axial extension portion (output hub), 52: radial extension portion, 53: radially inner connecting portion, 54: radially outer support portion, 55: output projection, 56: accommodation groove, 60: lock-up clutch, 61: piston plate, 62: rear stopper, 63: friction member, 70: torsional damper, 71: spring, 72: damper input member, 73: retainer, 731: first inner periphery support portion 732: front support portion, 733: outer periphery support portion, 74: damper stopper, 744: second inner periphery support portion, 745: stopper projection, 75: input projection, 756: outer periphery projection, 757: inner periphery projection, 76: piston connecting portion

### Mode for Invention

Hereinafter, preferred exemplary embodiments of the present invention will be described in detail with reference to the accompanying drawings.

The present invention is not limited to the exemplary embodiments disclosed below, but may be modified in various manners and implemented in various different forms. The exemplary embodiments are merely provided to complete the disclosure of the present invention and to fully convey the scope of the invention to one skilled in the art. Therefore, it should be understood that the present invention is not limited to the exemplary embodiments disclosed below, but the configuration of any one exemplary embodiment and the configuration of another exemplary embodiment can be substituted or added, and the present invention includes all alterations, equivalents, and alternatives that are included in the technical spirit and scope of the present invention.

It should be interpreted that the accompanying drawings are provided only to allow those skilled in the art to easily understand the exemplary embodiments disclosed in the present specification, and the technical spirit disclosed in the present specification is not limited by the accompanying drawings, and includes all alterations, equivalents, and alternatives that are included in the spirit and the technical scope of the present invention. In the drawings, sizes or thicknesses of components may be exaggerated, increased, or decreased for ease of understanding, but the protection scope of the present invention should not be restrictively construed.

The terms used in the present specification are used only for the purpose of describing particular implementations or exemplary embodiments and are not intended to limit the present invention. Further, singular expressions include plural expressions unless clearly described as different meanings in the context. In the present application, the terms "comprises," "comprising," "includes," "including," "containing," "has," "having", and other variations thereof are inclusive and therefore specify the presence of features, integers, steps, operations, components, parts, and/or combinations thereof disclosed in the specification. That is, in the present application, the terms "comprises," "comprising," "includes," "including," "containing," "has," "having", and other variations thereof do not preclude the possibility of the presence or addition of one or more other features, integers, steps, operations, components, parts, and/or combinations thereof.

Terms including an ordinary number, such as first and second, are used for describing various constituent elements, but the constituent elements are not limited by the terms. The terms are used only to discriminate one component from another component.

When it is mentioned that a certain constituent element is "connected" or "coupled" to another constituent element, it should be understood that the certain constituent element may be directly connected or coupled to the other constituent element or another intervening constituent element may be located therebetween. Conversely, when a certain constituent element is referred to as being "directly connected" or "directly coupled" to another constituent element, it should be understood that there is no intervening constituent element present.

When one component is described as being "above" or "below" another component, it should be understood that one component may be arranged directly on another component, and an intervening component may also be present between the components.

Unless otherwise defined, all terms used herein, including technical or scientific terms, have the same meanings as commonly understood by those skilled in the art to which the present invention pertains. Terms, such as those defined in commonly used dictionaries, should be interpreted as having meanings consistent with meanings in the context of related technologies and should not be interpreted as ideal or overly formal meanings unless explicitly defined in the present application.

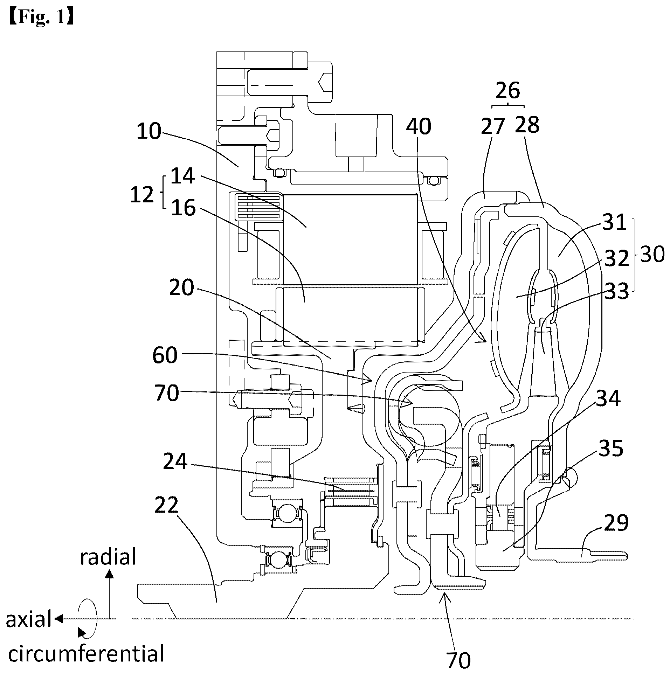

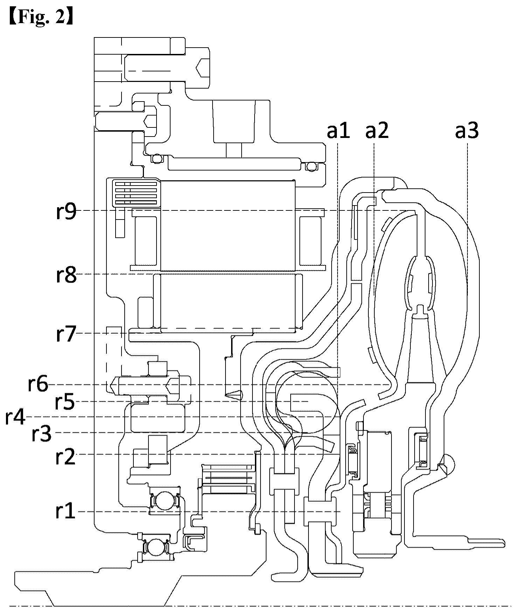

Since a hybrid drive module of an exemplary embodiment is symmetrical with respect to an axis, for convenience of drawing, only half thereof is drawn with respect to the axis in FIGS. 1 and 2. In addition, for convenience of explanation, the direction along the length direction of the axis forming the center of rotation of the hybrid drive module is called the axial direction. That is, the front-rear direction or axial direction is a direction parallel to the axis of rotation, in which the front (forward) refers to one direction toward a power source, such as an engine, and the rear (rearward) refers to the opposite direction, such as a direction toward the transmission. Therefore, the front surface refers to a surface facing forward, and the rear surface refers to a surface facing rearward.

The radial direction refers to a direction toward or away from the center of the axis of rotation along a straight line passing through the center on a plane perpendicular to the axis of rotation. The direction radially away from the center is referred to as the radially outward direction, and the direction toward the center is referred to as the radially inward direction.

The circumferential direction or peripheral direction refers to a direction encircling the axis of rotation. The outer periphery refers to the outer circumference, and the inner periphery refers to the inner circumference. Therefore, the outer peripheral surface refers to a surface facing away from the axis of rotation, and the inner peripheral surface refers to a surface facing toward the axis of rotation.

A circumferential side surface refers to a surface whose normal direction is oriented in the circumferential direction.

### [Overall Structure of Hybrid Drive Module]

Hereinafter, an overall structure of a preferred exemplary embodiment of a hybrid drive module according to the present invention will be described with reference to FIGS. 1 and 2.

A hybrid drive module includes a drive shaft 22 serving as an input member that receives power from an engine, a motor 12 including a stator 14 and a rotor 16, a main housing 10 in which the stator 14 is installed, a rotor hub 20 on which the rotor 16 is installed and which rotates together with the rotor 16, an engine clutch 24, which selectively connects the drive shaft 22 and the rotor hub 20 so that power from the drive shaft 22 is transmitted to the rotor hub 20, and a power transmission unit, which is arranged between the rotor hub 20 and an output member 50 and transmits rotational force of the rotor hub 20 to the output member 50.

The rotor hub 20 includes a radial extension portion extending in the radial direction, and an axial extension portion extending in the axial direction on a radially outer side of the radial extension portion. The rotor 16 is installed on the outer periphery of the axial extension portion.

The drive shaft 22 extends axially from a front central portion of the hybrid drive module and is connected to a radially inner portion of the radial extension portion of the rotor hub 20 so as to be relatively rotatable.

The rotor hub 20 and the drive shaft 22 are rotatably supported by the main housing 10 via bearings.

The engine clutch 24 is installed between the drive shaft 22 and the rotor hub 20 in the radial direction. Accordingly, the drive shaft 22 and the rotor hub 20 may be a one-way clutch in which relative rotation in one direction is permitted, but relative rotation in the other direction is not permitted. When the drive shaft 22 rotates in one direction and transmits power to the rotor hub 20, the one-way clutch does not allow the drive shaft 22 to rotate relative to the rotor hub 20 in the one direction, but allows it to rotate in the other direction.

A cover 26 is integrally connected to the rotor hub 20. The cover 26 includes a front cover 27 having a diameter increasing rearward, and a rear cover 28 connected to the front cover 27 and having a diameter decreasing rearward.

The front cover 27 is joined to a part of the radial extension portion of the rotor hub 20, forms a part of the axial extension portion of the rotor hub 20, and extends rearward. The front cover is extended radially and extends rearward at the rear of the rotor 16. The front cover 27 extends radially not only to the rotor 16 but also to a region near or beyond an outer peripheral surface of the stator 14.

An inner wall surface of the front cover 27 provides a surface that can be frictionally coupled with a friction member 63 of a lock-up clutch 60. It is preferable that such a surface is arranged radially away from the axis of rotation. In an exemplary embodiment, the surface is provided on a radially outermost side.

The rear cover 28 may be manufactured in a shell shape that faces rearward, has a reduced radius, and is suitable for installing blades of an impeller 31. Furthermore, a pump drive hub 29 is connected to a central portion of the rear cover 28 and extends rearward. The pump drive hub 29 may provide power to operate a fluid pump of the transmission to circulate transmission oil into a space inside the cover.

The power transmission unit is arranged in an internal space defined by the rotor hub 20 and the cover 26. The internal space is provided at the rear of the rotor hub 20.

The power transmission unit includes a torus that transmits the rotational force, which is transmitted from the rotor hub 20 through the cover 26, to the output member, and a lock-up clutch 60 that directly transmits the rotational force transmitted from the rotor hub 20 to the output member 50.

The torus may be a torque converter 30 including an impeller 31, a turbine 32, and a reactor 33. However, the present invention does not exclude the torus being a fluid clutch including the impeller 31 and the turbine 32 without the reactor 33.

The torque converter 30 includes the impeller 31 installed on the front surface of the rear cover 28, the turbine 32 arranged in front of the impeller 31 and facing the impeller 31, and the reactor 33 arranged between the impeller 31 and the turbine 32.

The turbine 32 is installed on a rear surface of a turbine plate 40. The turbine plate 40 extends in the radially inward direction from the turbine 32 and is integrally fixed to the output member 50 using a rivet or the like.

The reactor 33 is installed at a fixed end 35 via the one-way clutch 34 so as to be rotatable in one direction and to be constrained from rotating in the other direction. The fixed end 35 may be connected to the transmission and maintained in a fixed state.

Thrust bearings are interposed between the output member 50, the reactor 33, and the rear cover 28 in the axial direction, respectively, to regulate their axial positions and support relative rotation therebetween.

The lock-up clutch 60 is arranged between the rotor hub 20 and the output member 50 in the axial direction.

The lock-up clutch 60 includes a piston plate 61 extending in the radial direction and a friction member 63 provided on the piston plate 61.

In an exemplary embodiment, the friction member 63 is a single-plate clutch, for example. The single-plate clutch may be disadvantageous compared to a multi-plate clutch in terms of securing a friction surface, but has the advantage of being installed in a compact space in the axial direction.

The friction member 63 may be provided at a position as far as possible in the radial direction from the center of rotation so as to secure transmission torque. In addition, in order to secure axial force applied to the friction member 63, the radius of the piston plate 61 that presses the friction member 63 can be secured as much as possible.

According to an exemplary embodiment, the piston plate 61 has a large radius ranging from the center of rotation to the radially outer end portion of the cover 26. In addition, an example is provided in which the friction member 63 is arranged at the radially outer end portion of the piston plate 61 to secure transmission torque as much as possible.

A friction surface of the friction member 63 of the piston plate 61 faces forward and faces a rear surface of an inner wall surface of the front cover 27.

The piston plate 61 is connected to the output member 50 through a torsional damper 70. The torsional damper 70 is arranged between the piston plate 61 and the output member 50 in the axial direction.

The torsional damper 70 includes a damper input member 72 that is fixed to the piston plate 61 and slides and rotates integrally with the piston plate 61, springs 71 that are compressed or decompressed in the circumferential direction by the damper input member 72, and a damper output member that is connected to the output member 50 and receives rotational force of the damper input member 72 through the springs 71.

In an exemplary embodiment, the output member 50 functions as the damper output member.

Of course, the rotational force fluctuation is absorbed through the torsional damper 70, but the piston plate 61 actually rotates together with the output member 50.

In the internal space of the cover 26, when a hydraulic pressure in a space between the piston plate 61 and the rotor hub 20 and front cover 27, i.e., a space in front of the piston plate 61 is greater than a hydraulic pressure in a space behind the piston plate, the piston plate 61 is moved rearward, and the friction member 63 is separated from the front cover 27.

On the other hand, when the hydraulic pressure in the space behind the piston plate 61 is greater than the hydraulic pressure in the space in front of the piston plate, the piston plate 61 is moved forward, and the friction member 63 is frictionally coupled with the front cover 27 and rotates integrally therewith.

In a situation where the rotational speed (input-side speed) of the rotor hub 20 and the cover 26 is higher than the rotational speed (output-side speed) of the output member 50 and the turbine plate 40, such as in an acceleration situation where a stationary vehicle starts to move, transmission oil is supplied into the space between the rotor hub 20 and the piston plate 61 of the hybrid drive module. Accordingly, the pressure in the space in front of the piston plate 61 increases, and the piston plate 61 is moved rearward. Accordingly, the lock-up clutch 60 maintains a state in which the direct connection between the rotor hub 20 and the output member 50 is released.

The oil supplied in this way fully fills the space in which the torque converter 30 is provided, and a portion of the oil returns to the transmission through the space between the rear cover 28 and the reactor.

Thus, the oil flowing through the torus by the impeller 31 rotating at the input-side speed transmits the rotational force to the turbine (32), so that the output-side speed approaches the input-side speed.

When the output-side speed approaches the input-side speed, the transmission supplies the oil into the space between the output member 50 and the fixed end 35. Thus, the pressure in the space behind the piston plate 61 increases, and the piston plate 61 is moved forward. Accordingly, the lock-up clutch 60 directly couples the rotor hub 20 and the output member 50.

Thus, the input-side speed and the output-side speed substantially match. Although the magnitude of the rotational force of the engine may fluctuate to some extent, when the rotational force of the rotor hub 20 is transmitted to the output member 50 via the piston plate 61, the torsional damper 70 smooths the fluctuation and transmits the resulting rotational force to the output member 50.

### [Power Transmission Unit]

The structure of the power transmission unit of the hybrid drive module according to an exemplary embodiment will be specifically described below.

The power transmission unit of an exemplary embodiment has a structure that is compact in the axial direction while sufficiently securing a torque arm in the radial direction, thereby ensuring sufficient torque transmission.

In addition, the power transmission unit of an exemplary embodiment has a structure that ensures sufficient rigidity to prevent each component extending further in the radial direction from being deformed due to pressure applied in the axial direction.

The torque converter 30 may have an elliptical shape in which the torus is somewhat narrow in the axial direction but long in the radial direction, so as to ensure sufficient torque transmission while having a compact dimension in the axial direction. In an exemplary embodiment, an elliptical shape is exemplified in which a distance between an inner diameter r6 (see FIG. 2) and an outer diameter r9 of the torus is greater than an axial length (from a2 to a3) of the torus.

In addition, the torque converter 30 may be designed such that the torus is arranged as far as possible from the center of rotation so as to sufficiently secure the torque arm.

In an exemplary embodiment, an example is provided in which the impeller 31 and the turbine 32 extend further radially outward of an outer periphery r8 (see FIG. 2) of the rotor 16. It can be confirmed that the outer diameter r9 of the torus is designed to be greater than the inner diameter r8 of the stator.

The rear cover 28 provided with the impeller 31 is supported with both the radially outer portion and the radially inner portion connected to other components, but the turbine plate 40 on which the turbine 32 is installed is structurally disadvantageous in securing rigidity compared to the rear cover 28 because the radially outer portion is not connected to other components.

In such an environment, the pressure applied forward in the axial direction to the turbine plate 40, at a position having a large radial distance from the center of rotation, by the fluid flowing through the torus may cause a deformation in which the radially outer portion of the turbine plate 40 is pushed forward.

The turbine plate 40 may be manufactured by pressing a sheet-like metal plate having a predetermined thickness.

The turbine plate 40 includes a blade shell 41 having the turbine 32 installed thereon and configured to receive rotational force from a fluid flowing due to rotation of the impeller 31, a neck portion 42 connected to a radially inner end portion of the blade shell 41 and extending forward in a radially inward direction, and an output member connecting portion 43 extending in the radially inward direction from a radially inner end portion of the neck portion 42.

The blade shell 41 receives pressure of the fluid transmitted from the impeller 31, and is therefore subjected to a large force forward in the axial direction. Since the neck portion 42 has an obliquely extending cross-sectional shape, it has an excellent section modulus with respect to axial sagging deformation.

However, the output member connecting portion 43 connected to a radially inner side of the neck portion 42 extends substantially straight in the radial direction in order to be connected to the output member 50. Therefore, even if the neck portion 42 is not deformed while withstanding the axial force, the output member connecting portion 43 with a longer bending arm length from the blade shell 41 may be more susceptible to deformation.

The output member connecting portion 43 includes a radially outer portion 47 connected to the neck portion 42, and a radially inner portion 45 connected to a radially inner side of the radially outer portion 47.

In an exemplary embodiment, an example is provided in which radial lengths of the radially outer portion 47 and the radially inner portion 45 approximately correspond to each other.

The radially inner portion 45 has a concave portion whose cross-sectional shape is slightly recessed forward in the axial direction. Accordingly, sufficient rigidity of the radially inner portion 45 against axial deformation can be secured.

The output member 50 includes an output hub 51 extending in the axial direction, and a radial extension portion 52 extending radially outward from the output hub 51.

A spline extending in the axial direction is provided on an inner periphery of the output hub 51, and is engaged with a spline formed on an outer periphery of an input shaft of the transmission, so that the splines are rotationally constrained with respect to each other.

The output member 50 may be manufactured from a metal material with high rigidity.

The radial extension portion 52 extends radially outward from a front end portion of the axial extension portion 51. The radial extension portion includes a radially inner connecting portion 53 connected to the output hub 51, and a radially outer support portion 54 connected to a radially outer side of the radially inner connecting portion 53.

The radially outer support portion 54 may extend obliquely rearward from the radially inner connecting portion 53 and then extend straight in the radial direction.

The turbine plate 40 may be closely fixed to a rear surface of the radial extension portion 52 at the rear of the radial extension portion 52.

The centers of the turbine plate 40 and the output member 50 may be aligned by fitting a radially inner hole of the turbine plate 40 onto an outer periphery of the axial extension portion 51 of the output member 50.

Furthermore, the radially inner portion 45 of the output member connecting portion 43 and the radially inner connecting portion 53 of the radial extension portion 52 of the output member 50 are fixed to each other by a means such as a rivet. A plurality of holes through which the rivets pass are provided in the concave portion of the radially inner portion 45 of the output member connecting portion 43, along the circumferential direction and at a predetermined radial position r1. At the corresponding position r1, a plurality of holes through which the rivets pass are provided in the radially inner connecting portion 53 of the output member 50 along the circumferential direction.

The turbine plate 40 and the output member 50 are integrated, through the connection between the radially inner connecting portion 53 and the radially inner portion 45, in order to behave as a single body in the axial, radial, and circumferential directions.

A front surface of the radially outer portion 47 of the output member connecting portion 43 is supported forward while being in contact with a rear surface of the radially outer support portion 54 of the radial extension portion 52 of the output member 50. A rear surface of the radially outer portion 47 provides a surface for supporting a thrust bearing interposed between the radially outer portion and the reactor 33. To this end, the radially outer portion 47 may have a shape extending straight in the radial direction.

According to an exemplary embodiment, even though the radially outer portion 47 extends straight in the radial direction, the radially outer support portion 54 of the output member 50 axially supports the front surface of the radially outer portion 47, thereby sufficiently reinforcing the strength of a portion of the turbine plate 40 that may be vulnerable to axial deformation.

Accordingly, even when the blade shell 41 is pressed forward by the fluid flowing through the torus, the radial extension portion 52 of the output member 50 supports the turbine plate 40 forward up to a position as close as possible to the blade shell 41, so that deformation in which the blade shell 41 having a long radial distance sags forward due to the fluid in the torus can be prevented.

When the radially outer support portion 54 of the output member 50 supports the axially front portion of the output member connecting portion 43 up to a position r4 as far as possible in the radial direction from the fixing position r1 between the output member 50 and the turbine plate 40, a radial length over which the turbine plate 40 is not supported forward in the axial direction can be minimized accordingly.

The radially outer support portion 54 of the output member 50 can support the radially outer portion 47 forward up to a boundary portion r4 between the output member connecting portion 43 and the neck portion 42. Accordingly, the radial length (r9-r4) over which the turbine plate 40 is not supported forward in the axial direction can be minimized.

Thus, even when the turbine plate 40 is made of sheet metal, the output member 50 with higher strength definitely reinforces the turbine plate 40.

An exemplary embodiment provides a hybrid drive module in which the radially outer support portion 54 of the output member 50 reinforces the strength of the turbine plate 40 and also functions as a damper output member of the torsional damper 70, thereby achieving a further reduction in the number of components in the power transmission unit and a more compact structure in the axial direction.

The shape of the piston plate 61 of the lock-up clutch 60 according to an exemplary embodiment has a profile that substantially corresponds to the rear surfaces of the rotor hub 20 and the front cover 27.

The piston plate 61 includes a portion extending in the axial direction so as to correspond to the inner periphery of the rotor 16. In addition, except for the portion that provides a friction surface for the friction member 63 or is fastened to the damper input member 72, the piston plate generally has an obliquely extending shape rather than a shape that extends straight in the radial direction. With such a cross-sectional shape, the piston plate 61 can have sufficient resistance to deformation caused by axial force.

Furthermore, since the piston plate 61 extends radially from a portion where the input shaft of the transmission is accommodated to approximately the radially outer end portion of the cover 26, a sufficient area to receive axial pressure for the direct connection of the lock-up clutch 60 is secured.

Accordingly, the friction member 63 is arranged radially outward of an outer periphery r8 of the rotor 16, beyond the inner periphery r7 of the rotor 16 installed on the rotor hub 20.

Accordingly, even when a single-plate clutch is used, sufficient transmission torque capacity of the lock-up clutch 60 is secured.

The piston plate 61 is connected to the output member 50 through the torsional damper 70.

The torsional damper 70 may be arranged radially inward of the inner periphery r7 of the rotor 16 installed on the rotor hub 20. Thus, the torsional damper 70 can be arranged radially inward and rearward of the piston plate 61 in the radially inner space of the rotor 16. Accordingly, the hybrid drive module can be made more compact in the axial direction.

The torsional damper 70 includes a damper input member 72 that is connected to the piston plate 61 and behaves together with the piston plate 61.

The piston plate 61 has a flat section extending straight in the radial direction, at a position radially inward of the inner periphery r7 of the rotor 16. In correspondence with this, a piston connecting portion 76 extending straight in the radial direction is provided on a radially inner side of the damper input member 72.

The flat section is provided with a plurality of holes along the circumferential direction. At corresponding positions, the piston connecting portion 76 is also provided with a plurality of holes along the circumferential direction. Thus, in a state in which the rear surface of the piston plate 61 and the front surface of the piston connecting portion 76 are in close contact with each other, the piston plate 61 and the damper input member 72 can be riveted through the holes and integrally assembled.

The torsional damper 70 has a plurality of springs 71 arranged in a row along the circumferential direction. The spring may be a coil spring. In addition, in order to increase the elastic coefficient, the spring may be in the form in which a small-diameter spring is inserted inside a large-diameter spring.

In an exemplary embodiment, an example is provided in which five springs are arranged in a row in an arc shape. However, the number of springs is not limited thereto. Of course, linear springs can also be applied.

The damper input member 72 includes a retainer 73 for holding and supporting the springs 71 while allowing elastic deformation of the springs 71. The retainer 73 is provided on a radially outer side of the damper input member 72. Accordingly, the springs 71 can be arranged as far as possible in the radial direction from the center of rotation to secure the length of the torque arm.

The retainer 73 has an outer periphery support portion 733 that supports outer peripheries of the springs 71, and a front support portion 732 that supports front surfaces of the springs 71. A rear end portion of the outer periphery support portion 733 is bent radially inward to support up to the upper rear portions of the springs 71. At a portion where the front support portion 732 is connected to the piston connecting portion 76, a first inner periphery support portion 731 having a shape corresponding to a lower front portion of each spring 71 is provided to support the lower front portions of the springs 71.

The damper input member 72 has a plurality of input projections 75 each interposed between two circumferentially adjacent springs 71. In an exemplary embodiment, an example is provided in which the five input projections 75 are provided in correspondence with the number of springs.

The input projection 75 includes an outer periphery projection 756 recessed radially inward by beading the outer periphery support portion 733 of the retainer 73, and an inner periphery projection 757 recessed axially rearward and radially outward by beading the first inner periphery support portion 731 of the retainer 73.

Both circumferential end portions of the input projection 75 are in contact with longitudinal end portions of the springs 71 arranged on both sides in the circumferential direction. The outer periphery projection 756 is in contact with a portion located on a radially outer side of the longitudinal end portion of the spring, and the inner periphery projection 757 is in contact with a portion located on a radially inner side of the longitudinal end portion of the spring.

The damper input member 72 includes a damper stopper 74 extending axially rearward on a radially inner side of the spring 71. The damper stopper 74 is provided at a position approximately corresponding to a longitudinal central portion of the spring 71. In an exemplary embodiment, an example is provided in which the five damper stoppers 74 are provided in correspondence with the number of springs.

A portion of the damper stopper 74 that faces the spring 71 in the radial direction forms a second inner periphery support portion 744 that also functions as a retainer that supports the inner periphery of the spring 71. A tip portion, i.e., a rear end portion, of the damper stopper 74 forms a stopper projection 745 that is inserted into an accommodation groove 56 of the output member to be described below.

The radially outer support portion 54 of the output member 50 may include a plurality of output projections 55 interposed between the plurality of springs 71 of the torsional damper 70, which are arranged in a row along the circumferential direction. In an exemplary embodiment, an example is provided in which the five output projections 55 are provided in correspondence with the number of springs.

The output projections 55 extend in the radially outward direction from the radially outer support portion 54 and are bent forward, such that they interfere with the springs 71 in the circumferential direction, thereby allowing the output member 50 itself to function as a damper output member.

The output projection 55 is arranged between the outer periphery projection 756 and the inner periphery projection 757 in the radial direction, and both end portions thereof are in contact with central portions r5 of the longitudinal end portions of the springs 71 arranged on both sides in the circumferential direction, respectively.

Accordingly, when the lock-up clutch 60 is coupled with the cover 26, the rotational force of the rotor hub 20 can be damped by the springs 71 and transmitted to the output member 50.

Furthermore, since a rear surface of the output projection 55 extends further radially outward from the radially outer support portion 54, the rear surface of the output projection 55 may be used as a structure that is in contact with a front surface of the radially outer portion 47 of the output member connecting portion 43 and supports the output member connecting portion 43 up to the boundary portion r4 with the neck portion 42.

The output member connecting portion 43 is supported forward by the output projections 55 spaced at equal intervals in the circumferential direction. It is apparent that even when the output projections 55 do not support the entire circumference, they sufficiently reinforce the rigidity of the output member connecting portion 43.

In addition, the output member 50 has accommodation grooves 56 that interfere with the damper stoppers 74 to limit a relative rotational displacement of the damper input member 72 with respect to the output member 50 within a predetermined angle. The accommodation groove 56 is provided in a form in which a circumferential portion of the radially outer support portion 54 is recessed radially inward between two adjacent output projections 55. In an exemplary embodiment, an example is provided in which the five input projections 75 are provided in correspondence with the number of damper stoppers 74.

The maximum allowable relative rotational displacement of the damper input member 72 with respect to the output member 50 is determined based on a circumferential width of the accommodation groove 56 and a circumferential width of the damper stopper 74 accommodated therein.

Outer peripheral surfaces of the plurality of accommodation grooves 56 arranged along the circumferential direction and inner peripheral surfaces of the damper stoppers 74 are arranged to face each other in the radial direction. A radius r2 of the outer peripheral surface of the accommodation groove 56 is equal to or slightly smaller than a radius of the inner peripheral surface of the damper stopper 74 accommodated in the accommodation groove 56. Thus, centers of the damper input member 72 and the piston plate 61 are aligned with respect to a center of the output member 50.

In the axial direction, at least a portion of the radial extension portion 52 of the output member 50 is arranged forward of an axial rear end portion a1 of the spring 71. Thus, the radial extension portion 52 can be arranged within a region occupied in the axial direction by the springs 71 of the torsional damper 70. Accordingly, the axial dimension of the hybrid drive module can be further reduced.

In the radially outer support portion 54, at least a portion of an axial region in which an outer peripheral surface of a circumferential section where neither the accommodation groove 56 nor the output projection 55 is provided is arranged overlaps with an axial region in which the spring 71 is arranged, and is located radially inside the spring 71. The outer peripheral surface of the radially outer support portion 54 can also function as a retainer that supports the inner periphery of the spring 71.

The boundary portion r4 between the output member connecting portion 43 and the neck portion 42 of the turbine plate 40 is arranged radially outward of a radially inner end portion r3 of the spring 71.

The output projections 55 are spaced apart along the circumferential direction for functional reasons, while the output member connecting portion 43 of the turbine plate 40 supported by the output projections 55 provides a continuous annular surface in the circumferential direction. Accordingly, the front surface of the output member connecting portion 43 of the turbine plate 40 supported by the rear surfaces of the output projections 55 also functions as a retainer that supports the rear sides of the springs 71 of the torsional damper 70.

Furthermore, it is preferable to arrange the boundary portion r4 radially inward of the radially outer end portions of the springs 71, so as to further secure the radial length of the torus.

The piston plate 61 that slides axially for coupling and decoupling of the lock-up clutch 60 behaves together with the damper input member 72 of the torsional damper 70. Therefore, in order to ensure structural stability and smooth operation of the lock-up clutch 60 and the torsional damper 70, it is preferable that a sliding movement range of the piston plate 61 be limited within a predetermined range.

A front end of the range is naturally determined by a position where the friction member 63 is in contact with the cover 26 connecting the rotor hub 20 and the impeller 31.

A rear end of the range is determined by the output member 50.

In an exemplary embodiment, the output member 50 does not have a separate structure for limiting rearward movement of the piston plate 61, and a related structure is provided on the piston plate 61. This is determined by a position at which a rear stopper 62 structure provided at a radially inner end portion of the piston plate 61 is in contact with a front surface of the output member 50.

The rear stopper 62 may be provided in a form in which the piston plate 61 is recessed rearward in a concave shape, radially inward of the piston connecting portion 76 of the damper input member 72. The rear stopper 62 may extend further rearward than the piston connecting portion 76.

The rear stopper 62 may interfere with the radial extension portion 52 of the output member 50. Specifically, the rear stopper 62 may interfere with the radially inner connecting portion 53 of the radial extension portion 52.

To facilitate the interference of the rear stopper 62, the radially inner connecting portion 53 may be positioned forward of the radially outer support portion 54.

Thus, the output member 50 can be configured without a separate axial extension portion for axially aligning the piston plate 61, thereby reducing the number of components and simplifying the shape of the output member 50.

Furthermore, according to an exemplary embodiment, an inner peripheral surface of the rear stopper 62 of the piston plate 61 may be configured to be brought into contact with an outer peripheral surface of the input shaft of the transmission, thereby ensuring alignment between the center of the piston plate 61 and the center of the output member 50. Thus, the centers of the output member 50 and the piston plate 61 can be directly aligned with respect to the input shaft of the transmission.

While the present invention has been described above with reference to the accompanying drawings, the present invention is not limited to the drawings and the exemplary embodiments disclosed in the present specification, and it is apparent that the present invention may be variously modified by those skilled in the art without departing from the technical spirit of the present invention. Further, even though the operational effects of the configurations of the present invention have not been explicitly disclosed and described in the description of the exemplary embodiments of the present invention, the effects, which can be expected by the corresponding configurations, should, of course, be acceptable.

## Claims

1. A hybrid drive module comprising:
a power transmission unit configured to transmit rotational force of a rotor hub (20) generated by an engine and a motor (12) to a transmission, wherein
the power transmission unit comprises an output member (50) connected to an input shaft of the transmission so as to be rotationally constrained, and a torque converter (30) interposed between the rotor hub (20) and the output member (50) in a power transmission system,
the output member (50) comprises an output hub (51) extending in an axial direction so as to be rotationally constrained by being engaged with the input shaft of the transmission, and a radial extension portion (52) extending radially outward from the output hub (51),
the radial extension portion (52) comprises a radially inner connecting portion (53) connected to the output hub (51), and a radially outer support portion (54) connected to a radially outer side of the radially inner connecting portion (53),
the torque converter (30) comprises an impeller (31) configured to rotate together with the rotor hub (20), and a turbine (32) configured to face the impeller (31) in the axial direction in front of the impeller (31),
the turbine (32) is installed on a turbine plate (40),
the turbine plate (40) comprises a blade shell (41) having the turbine (32) installed thereon and configured to receive rotational force from a fluid flowing due to rotation of the impeller (31), a neck portion (42) connected to a radially inner end portion of the blade shell (41) and extending forward in a radially inward direction, and an output member connecting portion (43) extending in the radially inward direction from a radially inner end portion of the neck portion (42), and
a radially inner portion (45) of the output member connecting portion (43) is fixed to the radially inner connecting portion (53) of the radial extension portion (52) of the output member (50), and a front surface of a radially outer portion (47) of the output member connecting portion (43) is supported forward in contact with a rear surface of the radially outer support portion (54) of the radial extension portion (52) of the output member (50).

2. The hybrid drive module of claim 1, wherein the blade shell (41) of the turbine plate (40) extends further radially outward than an outer periphery (r8) of a rotor (16) installed on the rotor hub (20).

3. The hybrid drive module of claim 1, wherein the radially outer portion (47) of the output member connecting portion (43) is supported forward, in at least a partial circumferential region, up to a boundary portion (r4) between the output member connecting portion (43) and the neck portion (42) by the radially outer support portion (54) of the output member (50).

4. The hybrid drive module of claim 3, wherein
the power transmission unit further comprises a lock-up clutch (60) interposed between the rotor hub (20) and the output member (50) and arranged in parallel with the torque converter (30) in the power transmission system,
a piston plate (61) of the above lock-up clutch (60) is arranged between the rotor hub (20) and the output member (50) in the axial direction,
the piston plate (61) is connected to the output member (50) through a torsional damper (70),
the radially outer support portion (54) of the output member (50) comprises output projections (55) interposed between a plurality of springs (71) of the torsional damper (70), which are arranged in a row along a circumferential direction, and
rear surfaces of the output projection (55) are in contact with the front surface of the radially outer portion (47) of the output member connecting portion (43) and support the output member connecting portion (43) up to the boundary portion (r4) with the neck portion (42).

5. The hybrid drive module of claim 4, wherein the boundary portion (r4) between the output member connecting portion (43) and the neck portion (42) of the turbine plate (40) is arranged radially outward of a radially inner end portion (r3) of each of the springs (71).

6. The hybrid drive module of claim 4, wherein in the axial direction, at least a portion of the radial extension portion (52) of the output member (50) is arranged forward of an axial rear end portion (a1) of each of the springs (71).

7. The hybrid drive module of claim 1, wherein
the power transmission unit further comprises a lock-up clutch (60) interposed between the rotor hub (20) and the output member (50) and arranged in parallel with the torque converter (30) in the power transmission system,
a piston plate (61) of the above lock-up clutch (60) is arranged between the rotor hub (20) and the output member (50) in the axial direction,
a friction member (63) configured to provide a friction surface forward is installed at a radially outer end portion of the piston plate (61), and
the friction member (63) is arranged radially outward of an inner periphery (r7) of a rotor (16) installed on the rotor hub (20).

8. The hybrid drive module of claim 7, wherein the friction member (63) is arranged radially outward of an outer periphery (r8) of the rotor (16).

9. The hybrid drive module of claim 7, wherein
the piston plate (61) is configured to be movable in the axial direction within a predetermined range,
a front end of the predetermined range is determined by a position where the friction member (63) is in contact with the cover (26) connecting the rotor hub (20) and the impeller (31), and
a rear end of the predetermined range is determined by a position at which a rear stopper (62) provided at a radially inner end portion of the piston plate (61) is in contact with a front surface of the output member (50).

10. The hybrid drive module of claim 1, wherein
the power transmission unit further comprises a lock-up clutch (60) interposed between the rotor hub (20) and the output member (50) and arranged in parallel with the torque converter (30) in the power transmission system,
a piston plate (61) of the above lock-up clutch (60) is arranged between the rotor hub (20) and the output member (50) in the axial direction,
the piston plate (61) is connected to the output member (50) through a torsional damper (70),
the torsional damper (70) comprises:
a plurality of springs (71) arranged in a row along a circumferential direction,
a damper input member (72) connected to the piston plate (61) and configured to transmit rotational force of the piston plate (61) to the springs (71), and
output projections (55) configured to receive the rotational force of the piston plate (61) through the springs (71), and
the output projections (55) are provided on the radially outer support portion (54) of the output member (50).

11. The hybrid drive module of claim 10, wherein the friction member (70) is arranged radially inward of an inner periphery (r7) of a rotor (16) installed on the rotor hub (20).

12. The hybrid drive module of claim 10, wherein the damper input member (72) comprises:
a retainer (73) configured to accommodate and support the springs (71),
a piston connecting portion (76) fixed to the piston plate (61), and
damper stoppers (74) extending rearward, radially inward of the springs (71).

13. The hybrid drive module of claim 12, wherein
accommodation grooves (56), each configured to accommodate the damper stopper (74) and formed by a portion of the radially outer support portion (54) being recessed radially inward, are respectively provided between respective pairs of output projections (55) adjacent in the circumferential direction of the output member (50), respectively, and
outer peripheral surfaces of the plurality of accommodation grooves (56) arranged along the circumferential direction and inner peripheral surfaces of the damper stoppers (74) are arranged to face each other in the radial direction, so that centers of the damper input member (72) and the piston plate (61) are aligned with respect to a center of the output member (50).

14. The hybrid drive module of claim 1, wherein
the power transmission unit further comprises a lock-up clutch (60) interposed between the rotor hub (20) and the output member (50) and arranged in parallel with the torque converter (30) in the power transmission system,
a piston plate (61) of the above lock-up clutch (60) is arranged between the rotor hub (20) and the output member (50) in the axial direction, and
an inner peripheral surface of a radially inner end portion of the piston plate (61) is configured to be brought into contact with an outer peripheral surface of the input shaft of the transmission, thereby ensuring alignment between a center of the piston plate (61) and a center of the output member (50).
